# EUROPEAN PATENT APPLICATION

(11) **EP 4 847 358 A1**
(43) Date of publication of application: **02.12.2026**
(21) Application number: 26181166.5
(22) Date of filing: 26.05.2026
(51) Int. Cl.: B62J 17/10

(54) **STRADDLE-TYPE VEHICLE AND COWLING**

(30) Priority: 29.05.2025 JP 2025089618
(71) Applicant: Suzuki Motor Corporation, Hamamatsu-shi, Shizuoka 432-8611 (JP)
(72) Inventor: KONNO, Takeshi, Hamamatsu-shi, 432-8611 (JP)
(74) Representative: Haseltine Lake Kempner LLP

(57) **Abstract**

A straddle-type vehicle includes a wing extending laterally from a vehicle body, a wing end plate supporting the wing, and a wing end plate support portion extending laterally from the vehicle body and supporting the wing end plate. The wing has a base end portion connected to the vehicle body and a tip end portion connected to the wing end plate, one of the base end portion and the tip end portion is rotatably supported, and the other of the base end portion and the tip end portion is fixedly supported. When the wing is subjected to a certain amount of air resistance, the wing bends and an inclination angle of the wing with respect to a horizontal plane becomes smaller than an inclination angle when no bending occurs.

## Description

### TECHNICAL FIELD

The present invention relates to a straddle-type vehicle such as a motorcycle, and a cowling.

### BACKGROUND ART

Regarding a straddle-type vehicle such as a motorcycle, JP2024-110776A discloses a configuration in which wings are provided on sides of a front cowling. When the wing is subjected to traveling wind, downforce is generated, pushing down a vehicle body and increasing a ground contact force of a front wheel. By providing the wing to the straddle-type vehicle as such, wheelies are prevented, which is particularly effective in a racing vehicle that has a great acceleration force.

### SUMMARY OF INVENTION

According to an advantageous aspect of the present invention, there is provided a straddle-type vehicle including:
a wing extending laterally from a vehicle body;
a wing end plate supporting the wing; and
a wing end plate support portion extending laterally from the vehicle body and supporting the wing end plate, wherein
the wing has a base end portion connected to the vehicle body and a tip end portion connected to the wing end plate, one of the base end portion and the tip end portion is rotatably supported, and the other of the base end portion and the tip end portion is fixedly supported, and
when the wing is subjected to a certain amount of air resistance, the wing bends and an inclination angle of the wing with respect to a horizontal plane becomes smaller than an inclination angle when no bending occurs.

### BRIEF DESCRIPTION OF DRAWINGS

Fig. 1 is a right side view illustrating a schematic configuration of a vehicle front portion of a straddle-type vehicle;
Fig. 2 is a right side view illustrating a part of a cowling;
Fig. 3 is a front perspective view illustrating a part of the cowling;
Fig. 4 is a front perspective view illustrating a part of the cowling;
Figs. 5A and 5B are cross-sectional view illustrating a part of the cowling as viewed from a right side; and
Fig. 6 is an exploded perspective view illustrating a part of the cowling.

### DESCRIPTION OF EMBODIMENTS

By providing a wing to a straddle-type vehicle, downforce can be obtained, but traveling resistance increases when the vehicle is driving at a high speed. When the traveling resistance increases, there is a disadvantage in that acceleration and fuel efficiency is deteriorated. During high-speed straight driving in which wheelies are less likely to occur, it is more desirable to reduce the traveling resistance than to obtain the downforce.

The present invention has been made in view of the above-mentioned points, and an object of the present invention is to provide a wing that obtains downforce and reduce traveling resistance during high-speed driving.

A straddle-type vehicle according to an embodiment of the present invention includes a wing 14 extending laterally from a vehicle body, a wing end plate 17 supporting the wing 14, and a wing end plate support portion 16 extending laterally from the vehicle body and supporting the wing end plate 17, in which the wing 14 has a base end portion connected to the vehicle body and a tip end portion connected to the wing end plate 17, one of the base end portion and the tip end portion is rotatably supported, and the other of the base end portion and the tip end portion is fixedly supported, and when the wing 14 is subjected to a certain amount of air resistance, the wing 14 bends and an inclination angle of the wing 14 with respect to a horizontal plane becomes smaller than an inclination angle when no bending occurs. According to such a configuration, downforce can be obtained by the wing 14, and traveling resistance can be reduced when driving at a high speed.

### [Example]

A straddle-type vehicle and a cowling according to the present invention will be described with reference to the drawings.

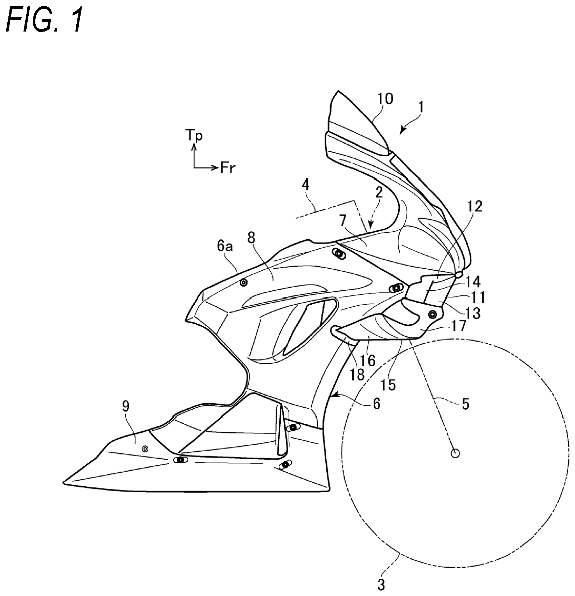

Fig. 1 is a right side view illustrating a schematic configuration of a vehicle front portion of a straddle-type vehicle 1. In the present application, front, back, left, right, up, and down directions are defined so that a traveling direction of the straddle-type vehicle 1 is set as the front direction, and the left, right, up, and down directions are set based on an orientation of a rider riding on the vehicle, in which, in each drawing, the forward direction is indicated by an arrow Fr, and the up direction is indicated by an arrow Tp, as necessary.

As illustrated schematically in Fig. 1, at the vehicle front portion of the straddle-type vehicle 1, a front wheel 3 as a steered wheel is rotatably supported by a steering device 2. The steering device 2 is provided so that a handlebar 4 is coupled with a pair of left and right front forks 5 via a steering shaft inserted into a head pipe (not illustrated) that configures a vehicle body frame. The front wheel 3 is rotatably supported at a lower end of the front fork 5. When the rider turns the handlebar 4 left and right, the front wheel 3 turns left and right integrally with the front fork 5 with the head pipe as a center.

As illustrated in Fig. 1, a cowling 6 is attached to the vehicle front portion of the straddle-type vehicle 1.

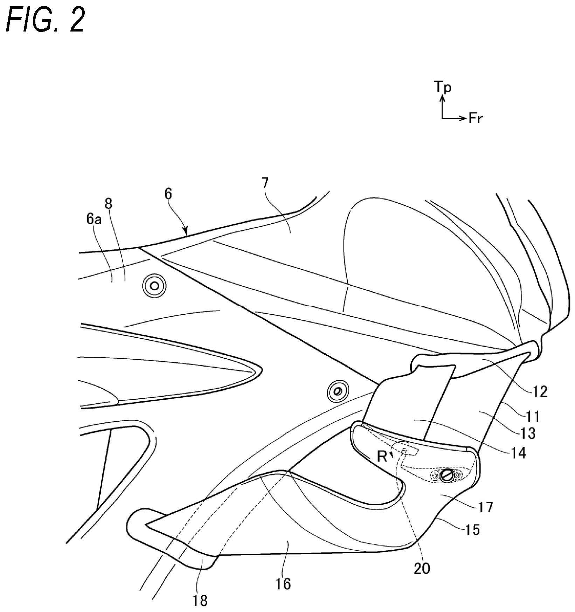

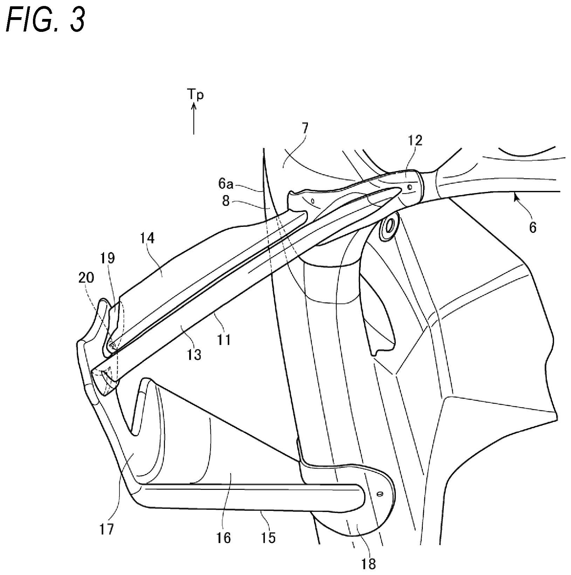

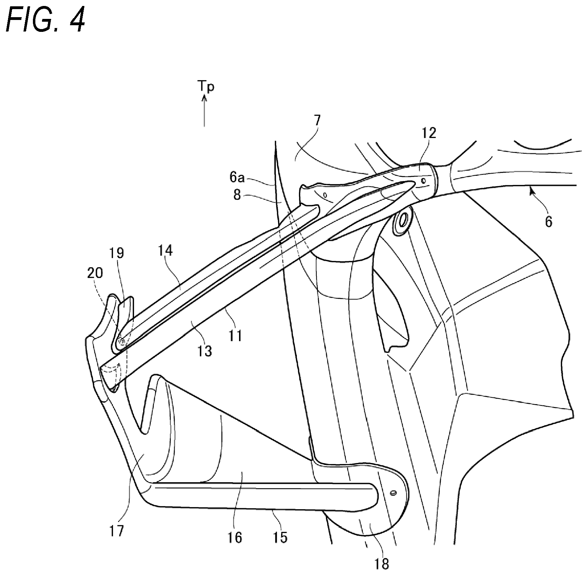

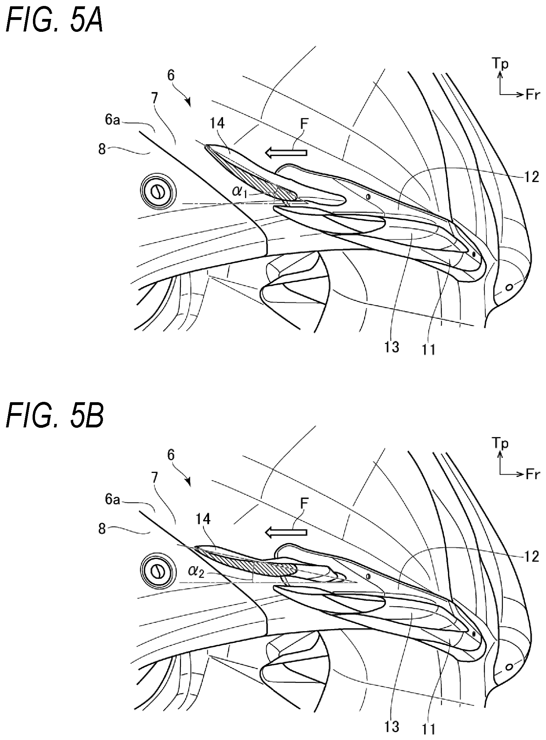

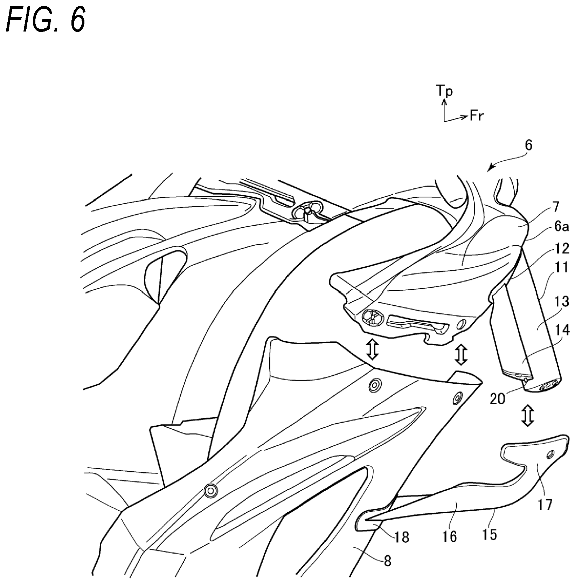

The cowling 6 will be described in detail below. Fig. 2 is a right side view illustrating a part of the cowling 6. Fig. 3 is a front perspective view illustrating a part of the cowling 6 during normal driving. Fig. 4 is a front perspective view illustrating a part of the cowling 6 during high-speed driving. Figs. 5A and 5B are cross-sectional views illustrating a part of the cowling 6 as viewed from a right side, in which Fig. 5A illustrates a state during normal driving and Fig. 5B illustrates a state during high-speed driving. Fig. 6 is an exploded perspective view illustrating a part of the cowling 6.

In the present application, for components extending in a vehicle width direction (such as a first wing 13, a second wing 14, and a lower wing 16 described below), an end on an inner side in the vehicle width direction is referred to as a base end portion, and an end on an outer side in the vehicle width direction is referred to as a tip end portion.

The cowling 6 includes a cowling body 6a that covers the vehicle front portion from the front and lateral sides. More specifically, the cowling body 6a is made of synthetic resin and can be separated into an upper cowl 7, a pair of left and right middle cowls 8, and a lower cowl 9. The upper cowl 7 is located at an upper portion of the vehicle front portion, and has a shape that becomes wider outward in the vehicle width direction from the front to the rear. The upper cowl 7 is located above the front wheel 3 and covers the front of the handlebar 4, and a screen 10 is provided on an upper portion thereof. The middle cowl 8 is connected to a lower rear portion of the upper cowl 7, has a shape that extends rearward and diagonally downward, and is located in the center in the up-down direction. The lower cowl 9 is connected to a lower portion of the middle cowl 8 and is located at a vehicle lower portion behind the front wheel 3. In the cowling 6 as described above, the upper cowl 7 and the middle cowl 8 are coupled to each other (see Fig. 6), the middle cowl 8 and the lower cowl 9 are coupled to each other, and the cowling 6 is attached and fixed to the vehicle using the vehicle body frame or the like.

An upper wing member 11 is attached to a front lower portion of the upper cowl 7. The upper wing member 11 is made of synthetic resin and is a component in which a base portion 12, the first wing 13 extending from the base portion 12, and the second wing 14 extending from the base portion 12 are integrated. The upper wing member 11 configured as such is disposed so that the base portion 12 is fixed to the front lower portion of the upper cowl 7, the first wing 13 extends laterally, and the second wing 14 extends laterally behind the first wing 13.

A lower wing member 15 made of synthetic resin is attached to the middle cowl 8. The lower wing member 15 is a component in which the lower wing 16 and a side wing 17 connected to a tip end portion of the lower wing 16 are integrated. The lower wing member 15 configured as such is disposed so that the base portion 18 at a base end portion of the lower wing 16 is fixed to the middle cowl 8, the lower wing 16 extends laterally and slightly forward, and the side wing 17 extends upward.

As illustrated in Fig. 5A, the first wing 13 has a plate-like shape with a streamlined cross section, and is configured so that a pressure difference occurs between upper and lower surfaces upon being subjected to traveling wind. The first wing 13 has a shape that rises from a front end to a rear end in a side view.

A tip end portion of the first wing 13 is fixedly supported by an upper end of the side wing 17. As illustrated in Fig. 6, the tip end portion of the first wing 13 can be separated from the upper end of the side wing 17.

As illustrated in Fig. 5A, the second wing 14 has a plate-like shape with a streamlined cross section, and is configured so that a pressure difference occurs between upper and lower surfaces upon being subjected to traveling wind F. The second wing 14 has a shape that rises from a front end toward a rear end in a side view, and rises higher than the first wing 13. The second wing 14 overlaps the first wing 13 in a front-rear direction, and the front end of the second wing 14 is located above the rear end of the first wing 13.

A tip end portion of the second wing 14 is rotatably supported by the upper end of the side wing 17 via a shaft 20. As illustrated in Fig. 6, the tip end portion of the second wing 14 can be separated from the upper end of the side wing 17. As illustrated in Figs. 3 and 4, a seat portion 19 that matches an end surface shape of the tip end portion of the second wing 14 is provided on an inner surface of the upper end of the side wing 17. The end surface of the tip end portion of the second wing 14 has a shape that smoothly inclines inward in the vehicle width direction from the front end to the rear end, and therefore, the seat portion 19 has a shape that smoothly protrudes inward in the vehicle width direction from the front end to the rear end. The tip end portion of the second wing 14 is pivotally supported at a front end of the seat portion 19. As illustrated in Fig. 5A, when the end surface of the tip end portion of the second wing 14 is in contact with the seat portion 19, the second wing 14 has a predetermined inclination angle with respect to a horizontal plane. The inclination angle with respect to the horizontal plane is an angle of a straight line passing through the front and rear ends of the wing (the second wing 14 in the example) with respect to the horizontal plane, and is an inclination angle α1 in the cross section of Figs. 5A and 5B.

Here, as illustrated in Figs. 4 and 5B, upon being subjected to a certain amount of air resistance, the second wing 14 bends mainly in a rotational direction (see arrow R in Fig. 2), and the inclination angle with respect to the horizontal plane becomes smaller than the inclination angle when no bending occurs (the inclination angle when no certain amount of air resistance is applied). The inclination angle with respect to the horizontal plane is an angle of a straight line passing through the front and rear ends of the wing (the second wing 14 in the example) with respect to the horizontal plane, and is an inclination angle α2 (< α1) in the cross section of Figs. 5A and 5B. In the present example, when the second wing 14 is bent upon being subjected to a certain amount of air resistance, the inclination angle of the second wing 14 with respect to the horizontal plane becomes approximately the same as the inclination angle of the first wing 13.

In the straddle-type vehicle 1 configured as described above, as illustrated in Figs. 3 and 5A, during normal driving, the wings 13, 14, and 16 are subjected to the traveling wind F and generate downforce that pushes down on the vehicle body, thereby increasing a ground contact force of the front wheel 3. As illustrated in Figs. 4 and 5B, during high-speed straight driving, the second wing 14 is subjected to a certain amount of air resistance and bends, and the inclination angle with respect to the horizontal plane becomes smaller than the inclination angle when no bending occurs. Accordingly, air resistance decreases. Here, the downforce weakens, but during the high-speed straight driving in which wheelies are less likely to occur, it is more desirable to reduce the traveling resistance than to obtain the downforce.

By adjusting a material, a shape, or the like of the second wing 14, it is possible to appropriately set a degree of bending and a certain amount of air resistance that causes the bending (in other words, a speed range that causes the bending). By finely adjusting the bending of the second wing 14 using an external spring or the like, it is possible to change the setting of the degree of bending and the certain amount of air resistance that causes the bending.

As described above, the wings include the second wing 14 extending laterally from the cowling body 6a, the side wing 17 performing as a wing end plate supporting the second wing 14, and the lower wing 16 extending laterally from the cowling body 6a and performing as a wing end plate support portion supporting the wing end plate. In the second wing 14, a tip end portion connected to the side wing 17 is rotatably supported, and a base end portion connected to the cowling body 6a is fixedly supported. The second wing 14 is subjected to a certain amount of air resistance and bends, and the inclination angle with respect to the horizontal plane becomes smaller than the inclination angle when no bending occurs.

According to such a configuration, downforce is exerted in a required speed range, and within a speed range at which downforce is no longer required, the second wing 14 can be bent to reduce downforce and air resistance. The configuration is simpler and is superior in terms of weight, reliability, and cost, compared to configurations that use electric actuators or the like to change a wing angle. In a structure in which one of the base end portion and the tip end portion of the second wing 14 is rotatably supported and the other is fixedly supported, an amount of angular change on the rotatable support side when a load is applied is greater than in a structure in which both ends are fixedly supported, and a drag reduction effect can be obtained while maintaining the strength of the fixed support side.

As such, the second wing 14 obtains downforce and reduces traveling resistance during high-speed driving.

Since the base end portion of the second wing 14 is connected to the cowling 6 stronger than the side wing 17 and fixedly supported, the bending of the second wing 14 can be stably supported.

The base end portions of the first wing 13 and the second wing 14 are connected to the upper cowl 7 as an upper cowl, the lower wing 16 is connected to the middle cowl 8 as a lower cowl, and the first wing 13, the second wing 14, and the lower wing 16 are separable from each other. According to such a configuration, as illustrated in Fig. 6, the upper wing member 11 is fixed to the upper cowl 7, the lower wing member 15 is fixed to the middle cowl 8, and the upper cowl 7 and the middle cowl 8 can be separated, thereby improving workability of removing and attaching the cowling 6.

The second wing 14 is configured so that the base end portion thereof is connected to the cowling 6 and fixedly supported and the tip end portion thereof is connected to the side wing 17 and rotatably supported, but a positional relationship may be reversed. That is, the second wing 14 may have a base end portion connected to the cowling 6 and rotatably supported, and a tip end portion connected to the side wing 17 and fixedly supported.

Although the wing end plate support portion (the lower wing 16 in the example) is disposed below the second wing 14, the configuration is not limited thereto, and the wing end plate support portion may be disposed above the second wing 14.

Although the second wing 14 is described as extending laterally from the cowling 6, the second wing 14 may extend laterally from a component forming the vehicle body other than the cowling (for example, the vehicle body frame, a headlamp bracket, or the like).

Although the example of the present invention is described above in detail with reference to the drawings, each example merely illustrates a specific example of how the present invention can be implemented. The technical scope of the present invention is not limited to the example. The present invention allows various modifications within the scope of the gist thereof, and the modifications are also included within the technical scope of the present invention.

A representative example of a riding vehicle to which the present invention can be applied is a motorcycle, but the present invention can also be widely applied to straddle-type vehicles such as motor tricycles and all terrain vehicles (ATVs).

As a configuration in which the wing obtains downforce and reduces traveling resistance during high-speed traveling, for example, in the case of multi-stage wings, one wing can be supported to be slidable up and down, and a gap between the one wing and the other wing can be made variable, thereby reducing effectiveness of the other wing.

### REFERENCE SINGS LIST

- 1: straddle-type vehicle
- 6: cowling
- 6a: cowling body
- 7: upper cowl
- 8: middle cowl
- 9: lower cowl
- 11: upper wing member
- 12: base portion
- 13: first wing
- 14: second wing
- 15: lower wing member
- 16: lower wing
- 17: side wing
- 18: base portion

## Claims

1. A straddle-type vehicle (1) comprising:
a wing (14) extending laterally from a vehicle body;
a wing end plate (17) supporting the wing (14); and
a wing end plate support portion (16) extending laterally from the vehicle body and supporting the wing end plate (17), wherein
the wing (14) has a base end portion connected to the vehicle body and a tip end portion connected to the wing end plate (17), one of the base end portion and the tip end portion is rotatably supported, and the other of the base end portion and the tip end portion is fixedly supported, and
when the wing (14) is subjected to a certain amount of air resistance, the wing (14) bends and an inclination angle of the wing (14) with respect to a horizontal plane becomes smaller than an inclination angle when no bending occurs.

2. The straddle-type vehicle according to claim 1, wherein
the tip end portion of the wing (14) is rotatably supported and the base end portion is fixedly supported.

3. The straddle-type vehicle according to claim 1 or 2, further comprising:
a cowling (6) that covers a vehicle front portion of the vehicle from front and lateral sides and configured to be separated into an upper cowl (7) and a lower cowl (8), wherein
the base end portion of the wing (14) is connected to one of the upper cowl (7) and the lower cowl (8), and the wing end plate support portion (16) is connected to the other of the upper cowl (7) and the lower cowl (8), and
the wing (14) and the wing end plate support portion (16) are configured to be separated from each other.

4. The straddle-type vehicle according to claim 1, wherein
the wing end plate support portion (16) is disposed above or below the wing (14) and performs as a distinct wing from the wing (14).

5. The straddle-type vehicle according to claim 1, wherein
the wing end plate support portion (16) and the wing end plate (17) are integrated with each other.

6. The straddle-type vehicle according to claim 1, further comprising
a front wing (13) extending laterally from the cowling body, wherein
the wing (14) is disposed behind the front wing (13).

7. The straddle-type vehicle according to claim 6, wherein
the wing (14) has a shape that rises from a front end toward a rear end thereof in a side view, and
the wing (14) rises higher than the front wing (13).

8. The straddle-type vehicle according to claim 6, wherein
a front end of the wing (14) is located above a rear end of the front wing (13).

9. A cowling (6) for a straddle-type vehicle (1) comprising:
a cowling body (6a) that covers a vehicle front portion of the vehicle from front and lateral sides;
a wing (14) extending laterally from the cowling body (6a);
a wing end plate (17) supporting the wing (14); and
a wing end plate support portion (16) extending laterally from the cowling body (6a) and supporting the wing end plate (17), wherein
the wing has a base end portion connected to the cowling body (6a) and a tip end portion connected to the wing end plate (17), one of the base end portion and the tip end portion is rotatably supported, and the other of the base end portion and the tip end portion is fixedly supported, and
when the wing (14) is subjected to a certain amount of air resistance, the wing (14) bends and an inclination angle of the wing (14) with respect to a horizontal plane becomes smaller than an inclination angle when no bending occurs.
